(19) Europäisches Patentamt
European Patent Office
Office européen des brevets

(11) **EP 2 581 733 B1**

(12) **FASCICULE DE BREVET EUROPEEN**

(45) Date de publication et mention de la délivrance du brevet:
**24.06.2015 Bulletin 2015/26**

(51) Int Cl.:
***G01N 23/04*** *(2006.01)*     ***G01N 23/223*** *(2006.01)*
***G01V 5/00*** *(2006.01)*     ***G01N 23/203*** *(2006.01)*

(21) Numéro de dépôt: **12187778.1**

(22) Date de dépôt: **09.10.2012**

(54) **Dispositif d'imagerie x ou gamma portable et polyvalent pour l'examen non destructif de colis suspects, intégrant les techniques d'imagerie en transmission et en rétrodiffusion**

Tragbare Mehrzweck-Röntgen- oder Gammastrahlbildgebungsvorrichtung für die nicht-destruktive Prüfung von verdächtigen Frachtstücken mit integrierten Bildanzeigetechniken für die Bildung von Transmissions-und Rückstreuungsbildern

Portable and versatile gamma or x-ray imaging device for non-destructive testing of suspicious packages incorporating the transmission and backscatter imaging techniques

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2011 FR 1159325**

(43) Date de publication de la demande:
**17.04.2013 Bulletin 2013/16**

(73) Titulaire: **Commissariat à l'Énergie Atomique et aux Énergies Alternatives**
**75015 Paris (FR)**

(72) Inventeurs:
 • **Lalleman, Anne-Sophie**
 **78460 Chevreuse (FR)**
 • **Ferrand, Gilles**
 **91800 Brunoy (FR)**

(74) Mandataire: **Ilgart, Jean-Christophe et al**
 **BREVALEX**
 **95, rue d'Amsterdam**
 **75378 Paris Cedex 8 (FR)**

(56) Documents cités:
**WO-A1-02/13517**     **US-B2- 7 623 614**

 • **ANNE-SOPHIE LALLEMAN ET AL: "A dual X-ray backscatter system for detecting explosives: Image and discrimination of a suspicious content", NUCLEAR SCIENCE SYMPOSIUM AND MEDICAL IMAGING CONFERENCE (NSS/MIC), 2011 IEEE, IEEE, 23 octobre 2011 (2011-10-23), pages 299-304, XP032117513, DOI: 10.1109/NSSMIC.2011.6154503 ISBN: 978-1-4673-0118-3**
 • **FREDERICK CARREL ET AL: "GAMPIX: A new gamma imaging system for radiological safety and Homeland Security Purposes", NUCLEAR SCIENCE SYMPOSIUM AND MEDICAL IMAGING CONFERENCE (NSS/MIC), 2011 IEEE, IEEE, 23 octobre 2011 (2011-10-23), pages 4739-4744, XP032117716, DOI: 10.1109/NSSMIC. 2011.6154706 ISBN: 978-1-4673-0118-3**

## Description

## DOMAINE TECHNIQUE

La présente invention concerne un dispositif portable pour l'examen non destructif de colis suspectés de contenir des matières illicites ou dangereuses (explosives notamment).

Ce dispositif permet de réaliser, dans des conditions de déploiement rapides et aisées, des radiographies X ou bien des images rétrodiffusées qui ont la propriété de révéler les matériaux légers. En outre, il peut permettre l'imagerie X ou gamma de sources radioactives, contenues dans un colis.

L'invention trouve des applications notamment dans le domaine de la sécurité où les services de déminage de l'armée et de la police sont chargés de l'investigation des objets susceptibles d'être des Engins Explosifs Improvisés ou des Engins Radiologiques Improvisés. La recherche de matières illicites (drogues, ...), menée par les douaniers, est également une application possible. Enfin, du fait de l'analogie des techniques mises en oeuvre, l'invention a des applications dans le domaine industriel, pour le contrôle non destructif de pièces mécaniques unitaires ou assemblées.

## ÉTAT DE LA TECHNIQUE ANTERIEURE

Dans le domaine de la lutte antiterroriste, le contrôle des objets et marchandises est confronté à deux problématiques distinctes :

-   l'analyse systématique du contenu des colis dans un flux tel que rencontré dans les zones de fret portuaires ou d'aéroports,

-   l'analyse spécifique et occasionnelle de colis isolés.

Dans le premier cas, les objets sont supposés inoffensifs par défaut. Ils sont généralement analysés par imagerie X en transmission, par balayage de l'objet. La technique de rétrodiffusion peut également apporter des informations utiles. Les systèmes utilisés pour les flux importants sont fixes et permettent l'analyse d'objets dont la taille varie de celle d'un petit bagage à celle d'un véhicule, en imposant un mouvement relatif entre le système d'imagerie et l'objet.

Dans le second cas, les objets sont supposés dangereux par défaut. L'analyse d'un objet est alors idéalement effectuée à l'aide d'équipements portables, le plus rapidement possible, sans déplacer l'objet ni être en contact avec ce dernier. La technique par balayage est inopérante dans ce cas ; et les exigences de rapidité de mise en oeuvre des équipements et d'obtention d'un diagnostic fiable rendent difficiles la mise au point d'un système d'imagerie répondant au besoin et aux contraintes particulières de ce cas de figure.

Il existe déjà des dispositifs portables pour l'examen non destructif d'objets par radiographie X (en transmission). Ils comportent des détecteurs ayant de grandes surfaces finement pixélisées, offrant une bonne résolution spatiale et un champ de vue étendu, adapté à la taille des petits bagages ou des sac à dos. La source de rayonnement X et le détecteur que comportent de tels dispositifs doivent être placés de part et d'autre d'un colis pour examiner ce dernier.

Avec de tels dispositifs, l'analyse d'un objet disposé trop près d'une paroi est impossible si l'espace entre cette paroi et l'objet est insuffisant pour pouvoir y installer le détecteur.

On connaît aussi un autre dispositif portable pour l'examen non destructif d'objets. Il utilise l'imagerie par rétrodiffusion X (en anglais, *X backscattering imaging*). Il est décrit dans le document suivant auquel on se reportera :

**[1] US 2004/0218714, invention de A. A. Faust.**

Cet autre dispositif est destiné à détecter et identifier des mines anti-personnel ou des Engins Explosifs Improvisés au moyen d'un spectro-imageur.

Il comprend une source de rayonnement pour irradier une zone à examiner, un masque codé et un détecteur matriciel en CdTe qui reçoit, à travers le masque codé, le rayonnement rétrodiffusé par la zone concernée, dont l'énergie spectrale est toujours inférieure à celle du rayonnement incident. Le résultat est obtenu après un traitement mathématique de décodage de l'image brute par la technique de CAI ou technique d'imagerie par ouverture codée (en anglais, *Coded Aperture Imaging*).

Pour des raisons technologiques et économiques, le détecteur en CdTe comprend une matrice de détection de petite taille et les pixels de détection qui la composent sont peu nombreux. Il en est de même pour le masque codé associé : il est de petite taille et ses pixels sont peu nombreux.

De ce fait, la résolution spatiale de cet autre dispositif connu est trop faible et son champ de vue n'est pas assez étendu pour qu'on puisse l'utiliser à la fois en transmission et en rétrodiffusion dans les domaines mentionnés plus haut. En particulier, il ne permet pas l'examen de colis suspects avec le niveau de performances requis.

Il existe donc un besoin de mise au point d'un système portable, permettant de réaliser les deux fonctions d'imagerie par transmission et d'imagerie par rétrodiffusion, afin de répondre à une large gamme de situations rencontrées.

## EXPOSÉ DE L'INVENTION

La présente invention résout le problème de la conception d'un dispositif portable et polyvalent, capable d'examiner un objet de façon non destructive, soit par radiographie X, soit par imagerie par rétrodiffusion X, avec un bon compromis entre la résolution spatiale, le champ de vue et la sensibilité de détection.

Les objets analysés sont généralement de la taille d'un sac à dos ou d'un petit bagage.

Ce dispositif (imageur) permet en outre de localiser un matériau radioactif dans un champ de vue, sans irradiation.

Pour résoudre le problème mentionné ci-dessus, on associe de façon innovante cinq équipements distincts :

- une source de rayonnement X ou gamma qui est adaptée à la radiographie,

- au moins un détecteur matriciel, sensible aux rayons X ou gamma, de grande taille et finement pixélisé, adapté à la radiographie, ce détecteur ayant une zone utile de détection de grande taille, dans laquelle on peut inscrire un carré d'au moins 20 cm de côté, cette zone utile étant composée de pixels de détection de petite taille, inférieure à 300 $\mu$m,

- un accessoire amovible de blindage et de collimation, dont on munit la source de rayonnement X ou gamma pour l'adapter à l'imagerie par rétrodiffusion,

- au moins un accessoire amovible de formation d'image, fondé sur la technique d'imagerie par ouvertures codées, cet accessoire de formation d'image comprenant une structure mécanique, de préférence motorisée, comportant un masque codé (plaque multi-trous qui est de préférence métallique) de grande taille et finement pixélisé, sur lequel on peut inscrire un carré d'au moins 6 cm de côté, ce masque codé comportant des pixels de petite taille, inférieure à 1000 $\mu$m, la structure étant prévue pour être placée contre le détecteur lorsqu'une imagerie en rétrodiffusion ou une imagerie de source radioactive est effectuée, et

- un système de commande synchronisée de la source de rayonnement X ou gamma, du détecteur et de l'accessoire de formation d'image, et d'acquisition et de traitement des données en vue d'afficher une image en temps réel.

L'invention s'appuie sur l'association, de façon innovante, des deux accessoires amovibles mentionnés ci-dessus à un système de radiographie X, association qui rend possible la mise en oeuvre des trois techniques suivantes d'inspection :

- la radiographie mono-énergie ou multi-énergies,

- l'imagerie par rétrodiffusion, et

- l'imagerie de source de rayonnement.

L'invention réside aussi dans la conception et le développement des deux accessoires mentionnés plus haut.

Le dispositif complet, objet de l'invention, est constitué d'un ensemble d'équipements portables, qui peuvent être rendus autonomes en énergie, en fonctionnant si nécessaire sur batterie, et qui peuvent être pilotés à distance. Sa polyvalence permet à l'utilisateur, grâce à une bonne résolution spatiale et un grand champ de vue dans toutes les configurations de mesure, de s'adapter à un large éventail de situations rencontrées, par exemple :

- l'examen rapide et aisé, sans le toucher ni le déplacer, d'un objet qui est abandonné au centre d'une pièce, aussi bien que dans un angle de murs et qui est donc difficile d'accès,

- ou la détection, à l'aide d'une image, du caractère radioactif d'un objet.

Selon un mode de réalisation particulier du dispositif portable, objet de l'invention, la source de rayonnement est un générateur de rayon X dont la puissance est supérieure à 100 W.

La structure mécanique, comportant le masque codé, est de préférence équipée d'un blindage qui est destiné à protéger le détecteur vis-à-vis de rayonnements parasites.

De préférence, le masque codé a un motif de type MURA antisymétrique et le dispositif portable comprend en outre un dispositif de rotation pour faire tourner le masque codé de 0° à 90° de façon réversible.

Le détecteur matriciel, sensible aux rayons X ou gamma, peut comprendre un détecteur électronique pixélisé ou un écran radioluminescent à mémoire.

La présente invention concerne aussi un procédé de mise en oeuvre du dispositif portable, objet de l'invention, dans lequel :

- on place la source de rayonnement et le détecteur de part et d'autre de l'objet pour examiner ce dernier par radiographie X ou gamma, ou

- on place la source de rayonnement, munie de l'accessoire de blindage et de collimation, et le détecteur, muni de l'accessoire de formation d'image, d'un même côté de l'objet pour examiner ce dernier par imagerie en rétrodiffusion X ou gamma, ou

- on place le détecteur, muni de l'accessoire de formation d'image, en regard de l'objet pour examiner ce dernier en vue de savoir s'il contient une source radioactive.

La présente invention concerne en outre un autre procédé de mise en oeuvre du dispositif portable, objet de l'invention, dans lequel :

- le dispositif portable comprend deux détecteurs,

- on place la source de rayonnement, munie de l'accessoire de blindage et de collimation, et l'un des détecteurs, de part et d'autre de l'objet pour examiner ce dernier par radiographie X ou gamma, et

- on place l'autre détecteur, muni de l'accessoire de formation d'image, et la source du même côté de l'objet pour examiner ensuite celui-ci par imagerie par rétrodiffusion X ou gamma.

La présente invention concerne également un procédé de mise en oeuvre du dispositif portable, objet de l'invention, dans lequel :

- le dispositif portable comprend deux détecteurs munis de leurs accessoires de formation d'image,
- on place la source de rayonnement, munie de l'accessoire de blindage et de collimation, et les deux détecteurs du même côté de l'objet pour examiner simultanément l'objet par rétrodiffusion X ou gamma suivant deux axes différents.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement un mode de mise en oeuvre des équipements d'un exemple du dispositif, objet de l'invention, équipements qui sont utilisés pour examiner un objet par radiographie X,

- la figure 2 illustre schématiquement un autre mode de mise en oeuvre des équipements de l'exemple du dispositif, équipements qui sont alors utilisés pour examiner un objet par imagerie par rétrodiffusion du rayonnement X,

- la figure 3 est une vue schématique de l'exemple du dispositif, objet de l'invention, dans le cas où il est utilisé pour détecter l'éventuelle présence, et localiser, un matériau radioactif dans un objet,

- la figure 4 illustre schématiquement la mise en oeuvre d'un détecteur en position de radiographie et d'un autre détecteur associé à un dispositif de formation d'images, utilisable dans l'invention, en configuration d'image en rétrodiffusion,

- la figure 5 illustre schématiquement la mise en oeuvre de deux détecteurs respectivement associés à des dispositifs de formation d'images, utilisables dans l'invention, en configuration d'image en rétrodiffusion, pour une reconstruction en trois dimensions des éléments constitutifs de l'objet inspecté,

- la figure 6 est une vue schématique d'un exemple d'accessoire de blindage et de collimation, utilisable dans l'invention,

- la figure 7 est une vue schématique d'un exemple d'accessoire de formation d'images, utilisable dans l'invention pour l'imagerie par rétrodiffusion du rayonnement X,

- les figures 8A et 8B illustrent schématiquement des dimensionnements géométriques de l'accessoire de formation d'images,

- la figure 9 est une photographie d'un masque codé 2*2 MURA 107 antisymétrique, utilisable dans l'invention pour effectuer une imagerie par rétrodiffusion du rayonnement X,

- la figure 10 représente une image obtenue expérimentalement par radiographie X d'une valise à l'aide de l'invention, cette valise contenant notamment un élément dit léger (de numéro atomique faible), en l'occurrence un savon, un téléphone portable incrusté dans un livre, un détonateur fictif, des câbles et des circuits imprimés,

- les figures 11A et 11B représentent respectivement l'image obtenue expérimentalement par rétrodiffusion du rayonnement X de la valise de la figure 10, et une superposition de cette image avec une photographie de la valise vue depuis le masque codé, et

- la figure 12 représente une image gamma superposée artificiellement à une image visible d'un même objet (valise) contenant une source radioactive.

**EXPOSE DETAILLE DE MODES DE REALISATION PARTICULIERS**

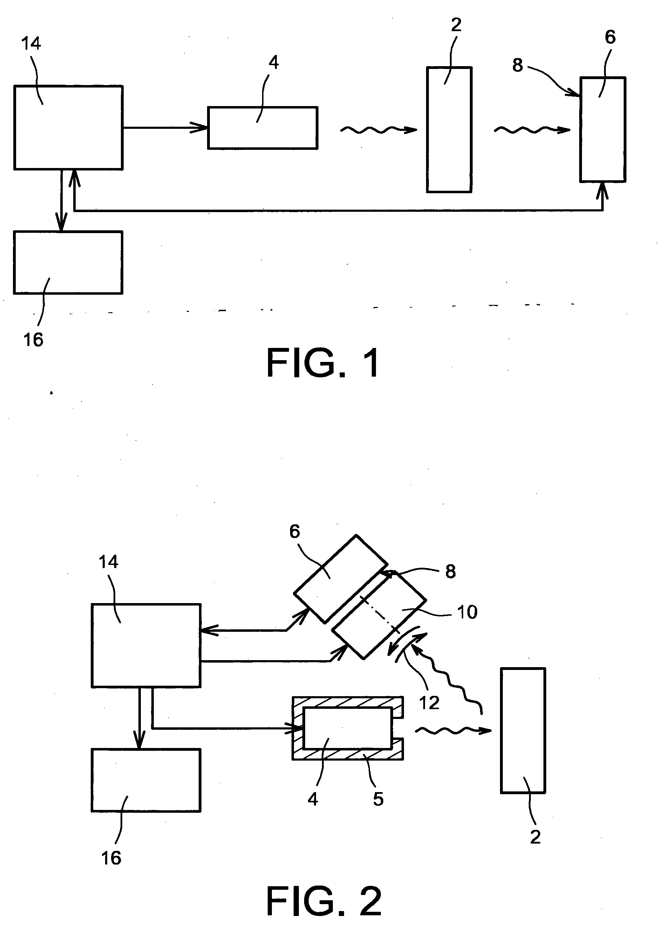

On décrit ci-après des modes opératoires d'un exemple du dispositif portable, objet de l'invention.
Dans cet exemple, le dispositif est fondé sur un équipement de radiographie X comprenant un générateur X continu 4, associé à un détecteur pixélisé 6 (détecteur matriciel sensible à la position des photons incidents) pour la réalisation d'images d'objets de la taille d'un bagage, selon la représentation schématique de la figure 1.
La référence 8 représente la zone utile de détection du détecteur 6.
Le générateur 4 (source de rayonnement X) et le détecteur 6 sont ici placés de part et d'autre d'un objet 2, dans une configuration géométrique jugée optimale par l'opérateur, tenant compte à la fois de la qualité d'image recherchée et des éventuelles contraintes liées à l'environnement. La distribution spectrale du rayonnement X et la divergence spatiale du faisceau X éclairant l'objet 2 et le détecteur 6 doivent être adaptées à la mesure.

L'ensemble est piloté par un équipement matériel et logiciel intégré 14 qui autorise deux configurations de mesures possibles :

- la première consiste à réaliser une image classique mono-énergie pour laquelle l'opérateur règle lui-même la tension, l'intensité et la durée d'émission du générateur 4,

- la seconde,à bi-énergie, est pilotée automatiquement par le système qui réalise une image en combinant deux énergies d'émission du générateur 4 afin de discriminer grossièrement la nature organique ou inorganique des éléments contenus dans l'objet 2.

L'équipement 14 est pourvu d'un dispositif 16 d'affichage des images obtenues.

On adjoint à l'équipement décrit précédemment un accessoire portable 10 qui permet la formation d'images du rayonnement X rétrodiffusé par l'objet, selon la configuration de mesure schématiquement représentée sur la figure 2.

Cet accessoire 10 comprend une plaque métallique rotative multi-trous, appelée "masque codé", solidarisée au détecteur 6 par l'intermédiaire d'une pièce mécanique (non représentée) qui fait office de support d'une part, et qui protège le détecteur du rayonnement parasite ambiant, d'autre part. Lorsque l'accessoire 10 est utilisé, il est placé contre la zone utile de détection 8 ; et il est destiné à former une image sur cette zone à partir d'un rayonnement X incident, issu de l'objet 2, par exemple un bagage.

Notons que la technique d'imagerie par rétrodiffusion permet de mettre en évidence des matériaux légers tels que ceux dont sont constitués les explosifs.

Dans la configuration de la figure 2, le générateur de rayonnement X 4 et le détecteur 6, muni de l'accessoire 10 (dispositif de formation d'images), sont placés d'un même côté de l'objet 2 pour examiner ce dernier par imagerie par rétrodiffusion X.

Le dispositif permet de voir ce que contient ce bagage (valise ou sac à dos par exemple).

Le générateur 4 est utilisé comme source de rayonnement X primaire. Il est muni d'un accessoire de blindage et de collimation 5. Cet accessoire ou équipement 5 a pour objectif de limiter le cône d'émission X au strict nécessaire, à savoir la surface utile de l'objet inspecté, et de bloquer le rayonnement de fuite du générateur.

Sans cet accessoire 5, la proportion du rayonnement parasite arrivant sur le détecteur 6 (diffusions dans l'air ou dans les zones de l'objet situées hors du champ de vue de l'imageur) sont trop importantes en regard du signal utile et nuisent gravement à la qualité d'image.

Au final, l'intensité de la source de rayonnement X, sa distribution spectrale, la divergence spatiale du faisceau, ainsi que la sensibilité du détecteur doivent être adaptées à la mesure.

Le générateur 4, l'accessoire de blindage et collimation 5 et l'accessoire de formation d'images 10 peuvent être solidarisés pour faciliter la mise en oeuvre opérationnelle du dispositif.

Sur la figure 2, la double flèche 12 symbolise une rotation réversible du masque codé, sur laquelle on reviendra par la suite.

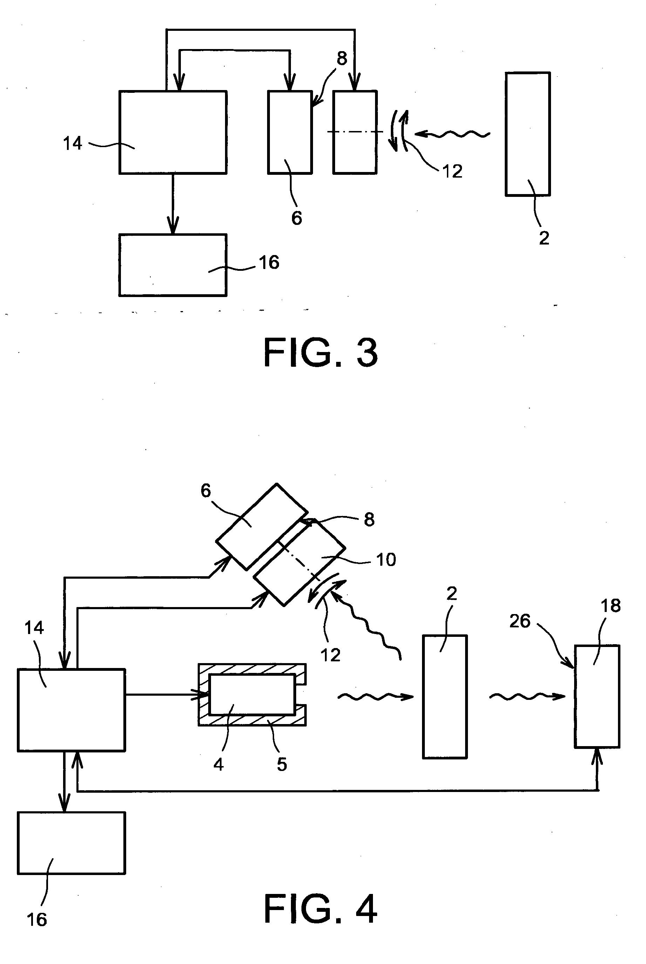

Dans le cas d'un objet lui-même émetteur d'un rayonnement X ou gamma (par exemple lorsqu'une source radioactive est placée dans un colis), on place le détecteur 6, muni du dispositif de formation d'image 10, en regard de l'objet 2 pour localiser la source émissive dans le champ de vue selon le schéma représenté sur la figure 3. Le générateur 4 n'est alors pas utilisé.

La détection d'une source radioactive est possible sous réserve d'adéquation entre les paramètres suivants : activité, énergie d'émission, dimensions de la source radioactive, distance entre la source radioactive et le masque codé et sensibilité du détecteur. Les performances d'imagerie (champ de vue, résolution spatiale) sont identiques à celles de l'imagerie rétrodiffusée, pour une géométrie de mesure identique.

Notons que la multiplication des imageurs peut enrichir les informations obtenues lors de l'examen d'un objet.

Une configuration de mesure envisageable est schématiquement représentée sur la figure 4.

Une seule source de rayonnement 4 est nécessaire, à laquelle on associe son accessoire de blindage et de collimation 5. Il est possible de réaliser, sans intervention de l'opérateur autre que la mise en place initiale des équipements et sous condition que les instruments soient tous pilotés à distance, des images successives en transmission classique et en rétrodiffusion.

Sur la figure 4, le détecteur 6, avec son accessoire 10, permet l'acquisition d'une image en rétrodiffusion. La référence 18 représente le détecteur permettant la formation d'une image en transmission ; et la référence 26 représente la zone utile de détection du détecteur 18. La réalisation des images successives nécessite une adaptation des réglages du générateur 4 et des détecteurs 6 et 18 utilisés pour passer d'une image à l'autre.

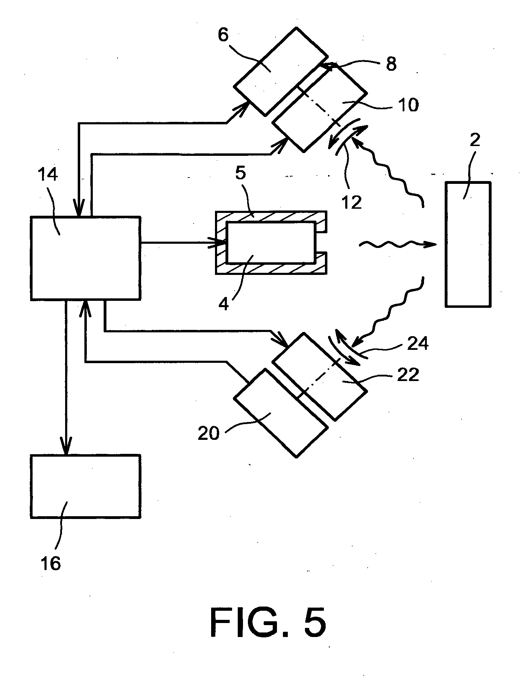

Une autre configuration de mesure possible est schématiquement représentée sur la figure 5.

Une seule source de rayonnement 4 est nécessaire, à laquelle on associe son accessoire de blindage et de collimation 5. Il est possible de réaliser, sans intervention de l'opérateur autre que la mise en place initiale des équipements et sous condition que les instruments soient tous pilotés à distance de manière synchrone, des images simultanées en rétrodiffusion.

Deux axes de vues différents peuvent permettre une reconstruction tomographique d'éléments particuliers de l'objet 2. La multiplication du nombre d'axes ne peut qu'améliorer le résultat de l'analyse.

Dans l'exemple de la figure 5, le détecteur 6, muni de son accessoire 10, permet l'obtention d'une image en rétrodiffusion suivant un premier axe de vue ; et l'on utilise un autre détecteur 20, identique au détecteur 6, pour obtenir une image en rétrodiffusion suivant un deuxième axe de vue. Le détecteur 20 est associé à un accessoire de formation d'images 22, identique à l'accessoire 10. La double flèche 24 symbolise une rotation réversible du masque codé de l'accessoire 22.

Une combinaison des configurations telles que présentées sur les figures 4 et 5 est envisageable pour associer, de façon non simultanée, une image en transmission à des images synchrones en rétrodiffusion.

La même configuration de mesure que celle présentée sur la figure 5, mais sans générateur de rayonnement X est adaptée à la localisation et aux mesures des dimensions d'une ou de plusieurs sources radioactives dans les champs de vue des imageurs (détecteurs 6 et 20 munis de leurs accessoires respectifs 10 et 22).

On décrit à présent les équipements et tout d'abord la source de rayonnement X.

Pour être compatible avec les deux techniques de radiographie en transmission et en rétrodiffusion décrites précédemment, la source de rayonnement 4 est un générateur X continu, fonctionnant sur batterie, avec une autonomie en énergie d'environ 10 minutes. La haute tension de cette source 4 est comprise entre 80 kV et 200 kV, sa puissance est supérieure ou égale à 100 Watts et sa durée d'émission d'au moins quelques minutes.

En fait, le dispositif complet est compatible avec divers générateurs de rayonnement X commercialement disponibles.

A titre purement indicatif et nullement limitatif, la source 4 est un générateur portable de rayonnement X, commercialisé par la société ICM sous le nom CP120 (tension réglable : 80 à 120 kV, intensité : 1 mA maximum à 120 kV et 1,5 mA à 80 kV, d'où une puissance de 120 W).

On précise que, dans l'invention, la source de rayonnement X peut être remplacée par un isotope radioactif dont l'énergie des raies d'émission gamma et le débit de dose sont adaptés à la mesure à effectuer.

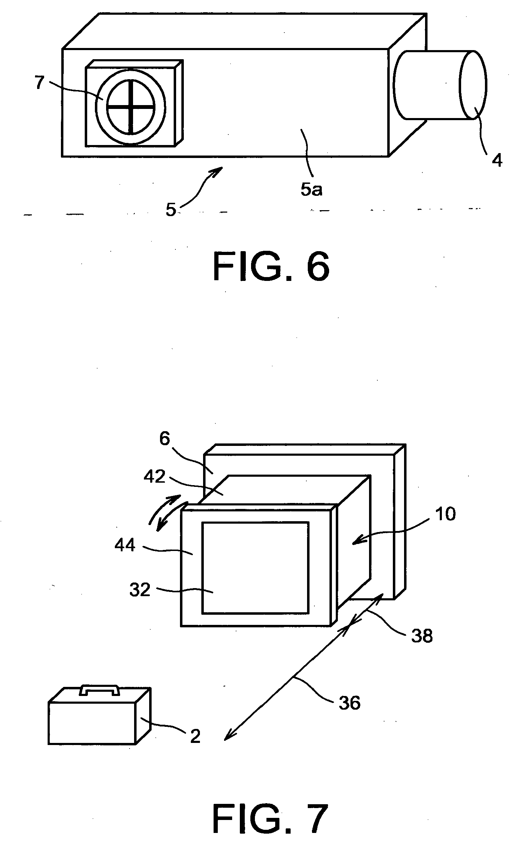

On décrit à présent, en faisant référence à la figure 6, l'accessoire amovible de blindage et de collimation 5 de la source 4 de rayonnement X (qui est également utilisable avec une source de rayonnement gamma).

La source 4 est pourvue de cet accessoire amovible de blindage et de collimation 5 afin de pouvoir être utilisée pour l'imagerie par rétrodiffusion de rayonnement X.

L'accessoire 5 comprend un blindage 5a qui sert à atténuer le rayonnement de fuite de la source 4, constituant un rayonnement parasite pour le détecteur 6 de la figure 2 en regard du faible signal utile provenant du rayonnement rétrodiffusé par l'objet 2. Le blindage 5a est constitué d'un matériau de numéro atomique et d'épaisseur tels que l'atténuation du rayonnement parasite soit suffisante, typiquement de l'ordre de 1/1000, en adéquation avec les caractéristiques du générateur X utilisé.

La collimation est réalisée à l'aide d'un anneau 7, monté de manière mécanique et amovible sur le blindage 5a, et centré sur le lobe d'émission de la source 4. Cette collimation sert principalement à délimiter un cône d'éclairement qui est adapté à la taille de l'objet 2 inspecté et qui est si possible inférieur ou égal au champ de vue du détecteur 6. Elle permet également de diminuer la proportion du rayonnement diffusé dans l'air ou d'autres matériaux environnants sans intérêt (murs...), perturbateurs de la mesure.

De même que précédemment, l'anneau 7 est réalisé dans un matériau de numéro atomique et d'épaisseur tels que l'atténuation du rayonnement soit suffisante. Plusieurs diamètres d'ouverture sont potentiellement nécessaires pour s'adapter aux différentes configurations de mesure rencontrées (taille de l'objet et distance à l'objet).

La conception du dispositif de blindage et de collimation 5 est, de préférence, optimisée pour minimiser son poids.

A titre purement indicatif et nullement limitatif, le blindage 5a (non optimisé) est une enveloppe en plomb du générateur 4, de 5 mm d'épaisseur. Et l'on utilise des anneaux 7 (collimateurs) en tungstène, de 4 mm d'épaisseur et de diamètres compris entre 10 mm et 50 mm, d'où des cônes d'émission respectivement compris entre 10° et 30°.

On décrit maintenant le détecteur 6.

Ce détecteur 6 est adapté aux mesures par les deux techniques de radiographie X et de rétrodiffusion X. Pour ce faire, il est constitué d'une matrice sensible au rayonnement X dans la gamme de 20 keV à 200 keV. Cette matrice a une grande surface active, d'au moins 20 cm x 20 cm, pour couvrir l'image d'un colis de type bagage ou sac à dos ; et elle est finement pixélisée, avec des tailles de pixels inférieures à 300 $\mu$m pour assurer une résolution spatiale adéquate.

L'obtention de la résolution spatiale souhaitée exclut les gamma-caméras très sensibles de type Anger (de résolution supérieure à 3 mm) au profit des détecteurs :

- du genre des Ecrans RadioLuminescents à Mémoire (ERLM), numérisés après exposition par un scanner laser (« Computed Radiography »),

- ou de type électronique (« Digital Radiography »), pilotables à distance, par exemple des « capteurs plans », de grandes dimensions, soit de type "direct" (les photons X sont convertis en énergie électrique dans une matrice de détecteurs - c'est le cas des détecteurs à matrice de sélénium), soit de type "indirect" (les photons X interagissent avec un scintillateur en dégageant de l'énergie lumineuse qui est ensuite convertie en énergie électrique dans une matrice de photodiodes ou dans une CCD).

De tels détecteurs sont portables et fonctionnent le plus souvent sur batterie.

Divers détecteurs de rayonnement commercialement disponibles sont compatibles avec l'invention. A titre purement indicatif et nullement limitatif, il est possible d'utiliser le détecteur FlashScan 35 OEM Fast (commercialisé par la Société Thalès), intégré dans un système opérationnel qui est commercialisé par la société VIDISCO et appelé « FlatFox17 ».

Ce système présente notamment l'avantage de piloter le détecteur et le générateur CP120 mentionné précédemment ; et il a les caractéristiques suivantes :

- le détecteur a une surface utile de 284 mm × 406 mm,

- il comporte des pixels carrés de 127 $\mu$m de côté,

- on peut effectuer un pilotage synchrone du détecteur et du générateur par le logiciel FlatFox de VIDISCO, et

- le système est portable et fonctionne à l'aide d'une batterie interne rechargeable.

On décrit à présent l'accessoire amovible de formation d'image 10 en faisant référence à la figure 7.

Cet accessoire amovible de formation d'image 10 comprend une structure mécanique motorisée 42 qui supporte un masque codé 32 et le positionne entre l'objet inspecté 2 et le détecteur 6 de rayonnement X lors de l'imagerie rétrodiffusée ou de l'imagerie de source. De plus, cette structure 42 comporte un blindage destiné à protéger le détecteur 6 vis-à-vis du rayonnement parasite.

Sur la figure 7, la référence 36 représente la distance entre l'objet 2 et le masque codé 32, la référence 38 représente la distance entre ce masque codé et le détecteur 6, et la référence 44 désigne un système de rotation motorisé, associé à la structure 42.

On décrit maintenant le masque codé 32 et le dimensionnement associé.

Le masque codé 32 est constitué d'une plaque multi-trous dont les caractéristiques dépendent des performances souhaitées en termes de champ de vue, de résolution spatiale, de rapport signal sur bruit de l'image, avec des contraintes sur le poids et le volume du système final.

Ce masque codé 32 est une matrice comportant un agement d'ouvertures, formées dans un matériau qui a un coefficient d'atténuation élevé pour le type de rayonnement mesuré, par exemple un matériau métallique, tel que du tungstène ou équivalent, dont l'épaisseur vaut typiquement 500 $\mu$m.

Notons que cette épaisseur et la taille des ouvertures sont du même ordre de grandeur afin de garantir un rapport d'aspect (diamètre d'une ouverture, divisé par l'épaisseur du matériau) proche de 1 pour limiter les effets de collimation qui sont néfastes à la qualité d'image.

En raison du faible niveau du flux rétrodiffusé, il convient de placer le détecteur 6 à proximité de l'objet 2. Il en résulte des configurations géométriques de mesure dites « en champ proche » pour lesquelles un problème bien connu est celui de l'apparition d'artefacts de décodage. Pour s'en affranchir au mieux, l'une des solutions préconisée est d'utiliser la technique masque / antimasque exposée dans le document

[2] « Near Field artifact réduction in planar coded aperture imaging », R. Accorsi et R.C. Lanza, Applied Optics, Vol.40 ,No.26, Septembre 2001 avec des motifs de type MURA, c'est-à-dire de type « réseau uniformément redondant modifié » (en anglais, *« modified uniformly redundant array »)*, de rang n où n est un nombre premier.
Au sujet des motifs MURA, on se reportera au document suivant :
[3] S.R. Gottesman et E.E. Fenimore, Applied Optics 28, 4344 (1989**).**

D'un point de vue pratique, un masque antisymétrique par rotation est intéressant. C'est la solution préférentiellement choisie dans l'invention. Une telle solution nécessite donc un système de rotation réversible passant d'une position à l'autre, qui est de préférence motorisé et électriquement autonome (référence 44 sur la figure 7).

Pour améliorer le rapport signal sur bruit de la mesure, tout en s'accomodant d'une taille de détecteur réduite, on préconise une duplication du motif unitaire du masque codé, sous forme de mosaïque 2×2, d'où un masque complet de (2n-1) lignes et (2n-1) colonnes.

Le masque codé 32 est une matrice de pixels carrés. Certains des pixels (de préférence la moitié) sont percés par des ouvertures circulaires. Le perçage circulaire permet d'assurer la tenue mécanique du masque qui est autoporté.

Le choix des paramètres de conception de l'accessoire de formation d'image 10 résulte d'un compromis entre les performances recherchées et les diverses contraintes.

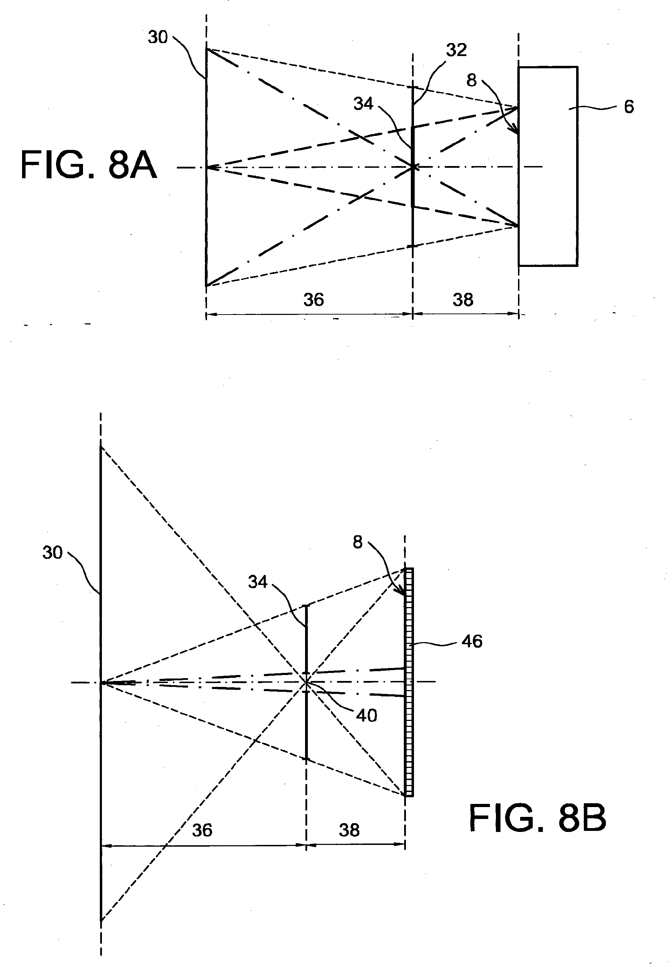

Une configuration géométrique envisageable est illustrée par les schémas des figures 8A et 8B.

Sur ces figures, la référence 30 représente un champ de vue de l'objet examiné, observé depuis le détecteur 6 à travers le masque codé 32. Un motif unitaire 34 de ce dernier est schématiquement représenté sur la figure 8A. L'un des pixels troués 40 de ce motif unitaire 34 est représenté de façon plus détaillée sur la figure 8B. De plus, sur la figure 8B, on a symbolisé les pixels 46 du détecteur 6, dans la zone utile de détection 8 de celui-ci.

Pour obtenir :

- un champ de vue 30 ayant la taille d'un bagage dont le côté est supérieur à 30 cm,

- une résolution spatiale meilleure que 3 mm,

- une distance masque-détecteur 38 comprise entre 15 cm et 25 cm pour limiter l'encombrement du système,

- une distance masque-objet 36 comprise entre 20 cm et 100 cm pour adapter la mesure aux contraintes d'encombrement et de flux de rayonnement, il faut :

  - une zone utile de détection 8 d'au moins 11 cm de côté, constituée de pixels 46 de 100 $\mu$m de côté, associés à un motif unitaire 34 dont le rang n est au moins égal à 127, le masque codé 32 ayant des pixels de 500 $\mu$m de côté avec des ouvertures 40 de 300 $\mu$m de diamètre, ou

  - une zone utile de détection 8 d'au moins 15 cm de côté, constituée de pixels 46 de 200 $\mu$m de côté, associés à un motif unitaire 34 dont le rang n est au moins égal à 103, le masque codé ayant des pixels de 1000 $\mu$m de côté, avec des ouvertures 40 de 750 $\mu$m de diamètre.

En ce qui concerne le masque unitaire 34, un rang croissant, à taille de pixel donné, a pour effet d'augmenter le champ de vue 30. La contrainte porte alors sur la taille résultante du masque unitaire 34 et de la zone utile de détection 8.

A rang donné, la réduction de la taille des pixels du masque codé 32 a pour effet d'améliorer la résolution spatiale mais de diminuer le champ de vue angulaire. La contrainte porte alors sur la faisabilité technologique et le coût du masque codé et du détecteur associé.

Revenons à la figure 7.

Le masque codé 32 est rendu solidaire du détecteur 6 par l'intermédiaire de la structure mécanique (ou pièce mécanique) 42 qui fait office de support d'une part, et de blindage protégeant le détecteur du rayonnement parasite ambiant, d'autre part. Le numéro atomique et l'épaisseur du matériau dont est faite la pièce 42 sont tels que l'atténuation du rayonnement parasite soit suffisante et adaptée à la mesure.

La pièce mécanique 42 est associée au système de rotation motorisé 44, qui est autonome en énergie et piloté à distance. Il fait passer le masque codé 32 d'une position 0° à une position 90° de manière réversible. Des butées (non représentées), équipées de microcontacts (non représentés), assurent un positionnement précis et reproductible pour éviter les artefacts de décodage.

Un dispositif conforme à l'invention permet la détection d'une source radioactive sous réserve d'adéquation entre les paramètres suivants : activité de la source radioactive, énergie d'émission, dimensions de cette source, distance source-masque codé et sensibilité du détecteur. Les performances d'imagerie (champ de vue, résolution spatiale) sont identiques à celles de l'imagerie rétrodiffusée, pour une géométrie de mesure identique.

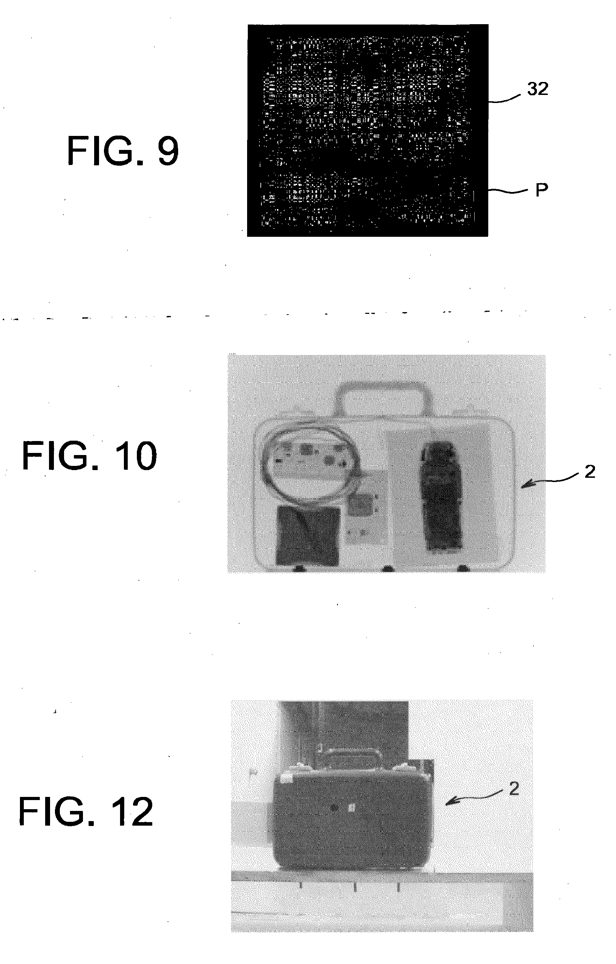

A titre purement indicatif et nullement limitatif, on utilise le masque codé 32 que montre la figure 9.

Ce masque comporte une mosaïque 2x2 du motif MURA antisymétrique de rang n=107, dont les pixels font 700 $\mu$m de côté. Il est pourvu de 22684 ouvertures de 500 $\mu$m de diamètre. Ces ouvertures sont formées par forage, à l'aide d'une machine à commande numérique, dans une plaque de DENAL® de 500 $\mu$m d'épaisseur. La surface utile de cette plaque vaut 14,9 cm x 14,9 cm et sa masse est inférieure à 200 g.

Le motif du masque codé est centré sur une plaque P légèrement plus grande pour pouvoir accrocher le masque à son support 42 (figure 7), à une distance fixe de 22,8 cm du détecteur.

Le système de rotation motorisée 44 (figure 7) est alimenté et piloté par l'intermédiaire de câbles jusqu'à une distance de 50 m.

Les résolutions spatiales accessibles varient de 2 mm à 2,7 mm et le champ de vue de 30 cm à 40 cm, pour une distance masque-objet variant de 68,5 cm à 100 cm. La projection du motif unitaire (masque codé unitaire) sur le détecteur utilise une surface de 10 cm x 10 cm à 12 cm x 12 cm.

Le blindage de la structure mécanique 42 faisant partie de l'accessoire de formation d'images est en plomb et a une épaisseur de 5 mm.

Revenons à présent sur le dispositif de commande et d'acquisition 14 (figures 1 à 5).

Ce dispositif 14 est utilisé pour les trois types d'imageries, à savoir la radiographie, l'imagerie par rétrodiffusion et l'imagerie de sources radioactives.

Plus précisément, le dispositif 14 est prévu pour :

- piloter de manière synchronisée l'ensemble formé par la source 4, le détecteur 6 et le système de commande du dispositif de rotation du masque 44 (figure 7) lorsque celui-ci est utilisé, et

- traiter les signaux bruts reçus par le détecteur 6 lors de l'examen du bagage 2, en vue de former une image de ce qu'il contient.

Le dispositif 14 comprend un ordinateur de pilotage et d'acquisition, pourvu d'un logiciel de commande et d'analyse. Les outils d'analyse et d'interprétation des images permettent notamment de changer les paramètres d'affichage, notamment le contraste, et de mesurer les dimensions des objets contenus dans le bagage 2 examiné.

En outre, comme on l'a vu, le dispositif 14 est pourvu d'un dispositif 16 permettant d'afficher les images obtenues.

Le logiciel associé au dispositif d'imagerie en transmission pilote la source 4 de rayonnement X et le détecteur 6 de manière synchronisée, puis transfère les signaux pour un affichage rapide de l'image dès la fin d'acquisition.

Dans le cas particulier de la radiographie à multi-énergies, le logiciel pilote la source 4 en modifiant son énergie dans un mode pré-établi, et analyse les images individuelles résultantes pour rendre une image qui permet de discriminer les matériaux organiques des matériaux inorganiques.

Pour l'imagerie par rétrodiffusion et l'imagerie de source radioactive, le dispositif 14 contient, en plus des fonctions précédentes, un logiciel de décodage des images obtenues par projection à travers le masque codé.

En effet, d'un point de vue mathématique, la matrice I, représentant l'image codée unitaire, résulte du produit de convolution, noté *, entre la distribution spatiale de l'objet-source O et la fonction de codage M qui représente le masque codé unitaire et a pour valeur 1 lorsque le pixel contient une ouverture et 0 sinon. En négligeant le bruit de fond, on peut donc écrire :

$$I(x,y) = O(x,y) * M(x,y)$$

La fonction de décodage N est déduite de la matrice M. Elle est telle que :

$$N(x,y) = -1 \text{ si } M(x,y) = 0$$

$$N(x,y) = 1 \text{ si } M(x,y) = 1$$

En effet, le produit de corrélation (noté $\otimes$) de M par N donne la fonction de Dirac $\delta$. On a :

La distribution spatiale de l'objet-source peut donc être restituée en effectuant le produit de corrélation entre la matrice I et la fonction de décodage N. En passant dans l'espace de Fourier, cette corrélation se résume à une multiplication de la transformée de Fourier des deux matrices.

A titre indicatif, on prend le complexe conjugué de la transformée de Fourier de N, pour améliorer légèrement la qualité d'image finale.

La matrice de décodage N doit être au préalable redimensionnée à la taille de la matrice I et dépend de la distance masque-objet. L'ensemble du processus de décodage est très rapidement réalisé compte tenu des performances des ordinateurs actuels.

En outre, le logiciel permet un affichage quasi-dynamique des images grâce à un rafraîchissement automatique dans un intervalle de temps court, compatible avec les contraintes de durée d'opération et des durées de fonctionnement du générateur X et du détecteur.

La sommation de plusieurs images brutes « masque » d'une part, « anti-masque » d'autre part avant décodage, permet d'améliorer la statistique de la mesure et donc la qualité d'image finale.

L'acquisition peut ainsi être arrêtée à tout moment. Par exemple, un rafraîchissement de l'affichage peut être effectué toutes les 3 minutes pour 2 minutes d'émission de rayonnement X et d'acquisition du détecteur (incluant les deux images masque et anti-masque).

La séquence d'obtention d'une image rétrodiffusée et de son affichage est la suivante :

- une image brute « masque » est réalisée avec le masque en position 0° pendant 1 minute d'émission de rayonnement X ;

- puis le masque est tourné de 90° ;

- puis une image brute « antimasque » est réalisée avec le masque en position 90° pendant la même durée ;

- le logiciel de déconvolution permet de décoder la première image brute puis la seconde ;

- le masque retourne ensuite à sa position initiale de 0° ;

- la somme des deux images décodées est calculée pour obtenir et afficher l'image rétrodiffusée sans artefacts.

Cette séquence est répétée, et les images brutes sont successivement additionnées aux précédentes puis décodées de la même façon pour obtenir, par sommation, l'image réactualisée qui est affichée régulièrement.

On précise que la technique d'imagerie de source radioactive utilise la même séquence (sans utiliser le générateur 4 de rayonnement X).

Des outils d'analyse et d'interprétation des images en rétrodiffusion et des images de sources radioactives permettent, en plus des outils utilisés pour l'imagerie en transmission :

- la mise au point de l'image pour en améliorer la netteté par une variation artificielle de la distance 36 masque-objet (figure 7) dans le processus de décodage ; cette opération permet d'estimer la distance réelle entre le masque 32 et l'objet rétrodiffusant 2 lorsque celui est caché par une paroi ;

- la localisation d'un ou plusieurs éléments suspects du colis, par superposition de l'image rétrodiffusée avec une photographie du bagage, sous réserve de placer un appareil de prise de vue au centre du masque 32 orienté dans la direction dudit bagage.

On expose ci-après divers résultats obtenus en mettant en oeuvre l'invention.

A titre purement indicatif et nullement limitatif, on a appliqué les techniques décrites en faisant référence aux figures 1, 2 et 3, à un bagage 2 constitué par une valise d'environ 28 cm x 18 cm. Cette valise contient divers objets tels qu'un livre, un téléphone portable incrusté dans ce dernier, deux circuits imprimés, des fils électriques, un détonateur fictif et un pain de savon de Marseille (pour simuler un explosif).

On a effectué une radiographie X de la valise, qui est représentée sur la figure 10.

Pour cette radiographie X, la source 4 est placée à 2 m de la face avant de la valise et le détecteur 6 est placé aussi près que possible de la face arrière de celle-ci. La qualité de l'image obtenue permet de distinguer les objets contenus dans la valise. Le dispositif 14 de pilotage et d'acquisition, associé au dispositif d'affichage 16, est placé à une distance de 50 m pour piloter la source 4 et le détecteur 6. Tout le dispositif de radiographie est alimenté par une batterie. La durée d'émission du rayonnement X est inférieure ou égale à 1 minute.

On a aussi effectué un examen de la valise par imagerie par rétrodiffusion.

Pour l'imagerie par rétrodiffusion, la source 4, pourvue du dispositif de blindage et de collimation 5, est placée à 50 cm de la valise ; le masque codé 32 est placé à une distance 36 de 66 cm ; la distance 38 entre le détecteur matriciel 6 et le masque codé 32 vaut 22,8 cm ; et l'angle entre l'axe d'émission de la source 4 et l'axe d'imagerie vaut 30°.

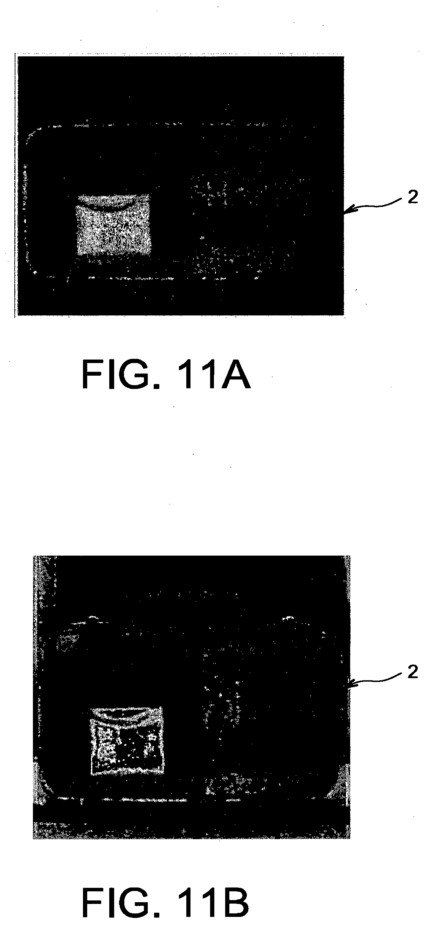

L'image rétrodiffusée de la valise est présentée sur la figure 11A. Le champ de vue est un carré de 29 cm de côté, à la distance masque-objet de 66 cm. La résolution spatiale vaut 0,15°, soit 2,2 mm à cette distance. Le temps d'acquisition total est égal à 15 minutes pour 10 minutes d'exposition aux rayons X, mais l'essentiel de l'information est obtenu dès le premier cycle d'acquisition de 3 minutes.

L'image rétrodiffusée, superposée à la photographie de la valise vue depuis le masque codé est également présentée sur la figure 11B.

Compte tenu des performances du dispositif utilisé, l'imagerie rétrodiffusée peut se faire derrière une paroi en aluminium de 2 mm d'épaisseur ou une paroi en acier d'environ 0,5 mm d'épaisseur.

On a en outre effectué un examen de la valise par imagerie gamma.

Dans l'exemple schématiquement illustré par la figure 3, ce même dispositif est utilisé pour examiner le bagage 2 en vue de savoir s'il contient une source radioactive. Dans ce cas, on dispose le détecteur 6, muni de l'accessoire de formation d'image 10, en regard du bagage 2. La source 4 n'est pas utilisée.

Pour illustrer cela, l'image d'une source ponctuelle, virtuellement contenue dans la même valise (figures 10, 11A, 11B) est présentée sur la figure 12, en superposant l'image de cette source ponctuelle à la photographie de la valise vue depuis le masque codé.

Dans les exemples de l'invention, donnés plus haut, on a considéré l'examen d'un objet à l'aide d'un rayonnement X. Mais l'invention n'est pas limitée à l'usage d'un tel rayonnement : elle peut être mise en oeuvre en utilisant un rayonnement gamma.

Plus précisément, à partir des exemples donnés, l'homme du métier peut concevoir un dispositif conforme à l'invention, comprenant une source de rayonnement gamma, un détecteur de rayonnement gamma, un accessoire amovible de blindage et de collimation adapté au rayonnement gamma, un accessoire amovible de formation d'image, adapté à ce rayonnement, et un système de commande, d'acquisition et de traitement (homologue du système 14) qui lui est également adapté.

**Revendications**

1. Dispositif portable et polyvalent pour l'examen non destructif d'un objet (2), **caractérisé en ce qu'**il comprend :

   - une source de rayonnement X ou gamma (4), qui est adaptée à la radiographie,
   - au moins un détecteur matriciel (6, 18, 20), sensible aux rayons X ou gamma, de grande taille et finement pixélisé, adapté à la radiographie, ce détecteur ayant une zone utile de détection (8) de grande taille, dans laquelle on peut inscrire un carré d'au moins 20 cm de côté, cette zone utile étant composée de pixels de détection de petite taille, inférieure à 300 $\mu$m,
   - un accessoire amovible de blindage et de collimation (5), dont on munit la source de rayonnement X ou gamma pour l'adapter à l'imagerie par rétrodiffusion,
   - au moins un accessoire amovible de formation d'image (10, 22), fondé sur la technique d'imagerie par ouvertures codées, cet accessoire de formation d'image comprenant une structure mécanique (42), de préférence motorisée, comportant un masque codé (32) de grande taille et finement pixélisé, sur lequel on peut inscrire un carré d'au moins 6 cm de côté, ce masque codé comportant des pixels de petite taille, inférieure à 1000 $\mu$m, la structure étant prévue pour être placée contre le détecteur lorsqu'une imagerie en rétrodiffusion ou une imagerie de source radioactive est effectuée, et
   - un système (14) de commande synchronisée de la source de rayonnement X ou gamma, du détecteur et de l'accessoire de formation d'image, et d'acquisition et de traitement des données en vue d'afficher une image en temps réel,

ce qui permet d'effectuer une radiographie de l'objet et/ou une imagerie en rétrodiffusion de celui-ci, et/ou de détecter et localiser une source radioactive présente dans l'objet.

2. Dispositif portable selon la revendication 1, dans lequel la source (4) est un générateur de rayons X dont la puissance est supérieure à 100 W.

3. Dispositif portable selon l'une quelconque des revendications 1 et 2, dans lequel la structure mécanique (42), comportant le masque codé (32), est équipée d'un blindage qui est destiné à protéger le détecteur vis-à-vis de rayonnements parasites.

4. Dispositif portable selon l'une quelconque des revendications 1 à 3, dans lequel le masque codé (32) a un motif de type MURA antisymétrique et le dispositif portable comprend en outre un dispositif de rotation (44) pour faire tourner le masque codé de 0° à 90° de façon réversible.

5. Dispositif portable selon l'une quelconques des revendications 1 à 4, dans lequel le détecteur matriciel (6, 20), sensible aux rayonnements X ou gamma, comprend un détecteur électronique pixélisé ou un écran radioluminescent à mémoire.

6. Procédé de mise en oeuvre du dispositif portable selon l'une quelconque des revendications 1 à 5, dans lequel :

   - on place la source de rayonnement (4) et le détecteur (6) de part et d'autre de l'objet (2) pour examiner ce dernier par radiographie X ou gamma, ou
   - on place la source de rayonnement (4), munie de l'accessoire de blindage et de collimation (5), et le détecteur (6), muni de l'accessoire de formation d'image (10), d'un même côté de l'objet (2) pour examiner ce dernier par imagerie en rétrodiffusion X ou gamma, ou
   - on place le détecteur (6), muni de l'accessoire de formation d'image (10), en regard de l'objet (2) pour examiner ce dernier en vue de savoir s'il contient une source radioactive.

7. Procédé de mise en oeuvre du dispositif portable selon l'une quelconque des revendications 1 à 5, dans lequel :

   - le dispositif portable comprend deux détecteurs,
   - on place la source de rayonnement (4), munie de l'accessoire de blindage et de collimation (5), et l'un (18) des détecteurs, de part et d'autre de l'objet (2) pour examiner ce dernier par radiographie X ou gamma, et

   - l'on place l'autre détecteur (6), muni de l'accessoire de formation d'image (10), et la source (4) du même côté de l'objet (2) pour examiner ensuite celui-ci par imagerie par rétrodiffusion X ou gamma.

8. Procédé de mise en oeuvre du dispositif portable selon l'une quelconque des revendications 1 à 5, dans lequel :

   - le dispositif portable comprend deux détecteurs (6, 20) munis de leurs accessoires de formation d'image (10, 22),
   - on place la source de rayonnement (4), munie de l'accessoire de blindage et de collimation (5), et les deux détecteurs du même côté de l'objet (2) pour examiner simultanément l'objet par rétrodiffusion X ou gamma suivant deux axes différents.

**Patentansprüche**

1. Tragbare Mehrzweck-Vorrichtung für die nichtdestruktive Prüfung eines Objekts (2), **dadurch gekennzeichnet, dass** sie aufweist:

   - eine Röntgen- bzw. Gammastrahlenquelle (4), die für die Radiographie geeignet ist,
   - zumindest einen Matrixdetektor (6, 18, 20), der gegenüber Röntgen- bzw. Gammastrahlen empfindlich ist, von großer Abmessung und fein gepixelt ist und für die Radiographie geeignet ist, wobei dieser Detektor einen Erfassungs-Nutzbereich (8) mit großer Abmessung aufweist, in welchem sich ein Quadrat von zumindest 20 cm Seitenlänge einbeschreiben lässt, wobei dieser Nutzbereich sich aus kleinen Erfassungspixeln zusammensetzt, die kleiner als 300 μm sind,
   - ein abnehmbares Zubehörteil zur Abschirmung und Kollimation (5), mit dem die Röntgen- bzw. Gammastrahlenquelle ausgestattet wird, um sie auf die Rückstreubildgebung anzupassen,
   - zumindest ein abnehmbares Zubehörteil zur Bilderzeugung (10, 22), das auf der Bildgebungstechnik durch codierte Öffnungen beruht, wobei dieses Zubehörteil zur Bilderzeugung einen vorzugsweise motorisierten mechanischen Aufbau (42) aufweist, der eine codierte Maske (32) aufweist, die von großer Abmessung und fein gepixelt ist, in die sich ein Quadrat mit zumindest 6 cm Seitenlänge einbeschreiben lässt, wobei diese codierte Maske kleine Pixel von unter 1000 μm hat, wobei der Aufbau dazu vorgesehen ist, an den Detektor dann angesetzt zu werden, wenn eine Rückstreubildgebung oder eine Bildgebung mit radioaktiver Quelle erfolgt, und

- ein System (14) zum synchronisierten Steuern der Röntgen- bzw. Gammastrahlenquelle, des Detektors und des Zubehörteils zur Bilderzeugung, und zum Erfassen und Verarbeiten von Daten, um ein Bild in Echtzeit anzuzeigen,

wodurch es möglich ist, eine Radiographie des Objekts und/oder eine Rückstreubildgebung desselben durchzuführen und/oder eine im Objekt vorhandene radioaktive Quelle zu erfassen und zu orten.

2. Tragbare Vorrichtung nach Anspruch 1, wobei die Quelle (4) ein Röntgenstrahlgenerator ist, dessen Leistung über 100 W liegt.

3. Tragbare Vorrichtung nach einem der Ansprüche 1 und 2, wobei der mechanische Aufbau (42), der die codierte Maske (32) aufweist, mit einer Abschirmung versehen ist, die dazu bestimmt ist, den Detektor vor Störstrahlungen zu schützen.

4. Tragbare Vorrichtung nach einem der Ansprüche 1 bis 3, wobei die codierte Maske (32) ein antisymmetrisches Muster vom Typ MURA hat und die tragbare Vorrichtung ferner eine Rotationseinrichtung (44) aufweist, um die codierte Maske von 0° auf 90° reversibel zu drehen.

5. Tragbare Vorrichtung nach einem der Ansprüche 1 bis 4, wobei der gegenüber Röntgen- bzw. Gammastrahlen empfindliche Matrixdetektor (6, 20) einen gepixelten elektronischen Detektor oder einen Radiolumineszenzschirm mit Speicher aufweist.

6. Verfahren zum Einsetzen der tragbaren Vorrichtung nach einem der Ansprüche 1 bis 5, wobei:

- die Strahlungsquelle (4) und der Detektor (6) auf beiden Seiten des Objekts (2) angeordnet werden, um letzteren mit Röntgen- bzw. Gammaradiographie zu prüfen, oder
- die mit dem Zubehörteil zur Abschirmung und Kollimation (5) versehende Strahlungsquelle (4) und der mit dem Zubehörteil zur Bilderzeugung (10) versehene Detektor (6) auf einer gleichen Seite des Objekts (2) angeordnet werden, um letzteres mit Röntgen- bzw. Gamma-Rückstreubildgebung zu prüfen, oder
- der mit dem Zubehörteil zur Bilderzeugung (10) versehene Detektor (6) gegenüber dem Objekt (2) angeordnet wird, um letzteres darauf zu prüfen, ob es eine radioaktive Quelle beinhaltet.

7. Verfahren zum Einsetzen der tragbaren Vorrichtung nach einem der Ansprüche 1 bis 5, wobei:

- die tragbare Vorrichtung zwei Detektoren enthält,
- die mit dem Zubehörteil zur Abschirmung und Kollimation (5) versehende Strahlungsquelle (4) und einer (18) der Detektoren auf beiden Seiten des Objekts (2) angeordnet werden, um letzteres mit Röntgen- bzw. GammaRadiographie zu prüfen, und
- der mit dem Zubehörteil zur Bilderzeugung (10) versehene weitere Detektor (6) und die Strahlungsquelle (4) auf der gleichen Seite des Objekts (2) angeordnet werden, um dann letzteres mit Röntgen- bzw. Gamma-Rückstreubildgebung zu prüfen.

8. Verfahren zum Einsetzen der tragbaren Vorrichtung nach einem der Ansprüche 1 bis 5, wobei:

- die tragbare Vorrichtung zwei Detektoren (6, 20) enthält, die mit ihren Zubehörteilen zur Bilderzeugung (10, 22) versehen sind,
- die mit dem Zubehörteil zur Abschirmung und Kollimation (5) versehende Strahlungsquelle (4) und die beiden Detektoren auf der gleichen Seite des Objekts (2) angeordnet werden, um das Objekt durch Röntgen- bzw. Gamma-Rückstreuung in zwei unterschiedlichen Achsen gleichzeitig zu prüfen.

**Claims**

1. Portable and versatile device for nondestructive examination of an object (2), **characterised in that** it comprises:

- an X or gamma radiation source (4), adapted to radiography,
- at least one matrix detector (6, 18, 20), sensitive to X rays or gamma rays, that is large and finely pixelated, adapted to radiography, this detector having a large useful detection zone (8) in which a square with sides of at least 20 cm will be inscribed, this useful zone being composed of small detection pixels, smaller than 300 μm,
- a removable shielding and collimation accessory (5), fitted on the X or gamma radiation source, to adapt it to backscattering imaging,
- at least one removable image formation accessory (10, 22), based on the coded aperture imaging technique, this image formation accessory including a mechanical structure (42), preferably motor driven, comprising a large and finely pixelated coded mask (32) on which a square with sides of at least 6 cm can be inscribed, this coded mask comprising small pixels smaller than 1000 μm, the structure being designed to be placed in contact with the detector for backscattering imaging or radioactive source imaging, and

- a system (14) for the synchronised control of the X or gamma radiation source, the detector and the image formation accessory, and for data acquisition and processing in order to display an image in real time,

which enables radiography of the object and/or backscattering imaging thereof and/or detection and localization of a radioactive source present in the object.

2. Portable device according to claim 1, in which the source (4) is an X-ray generator with a power of more than 100 W.

3. Portable device according to any one of claims 1 and 2, in which the mechanical structure (42), comprising the coded mask (32), is equipped with shielding that will protect the detector from parasite radiation.

4. Portable device according to any one of claims 1 to 3, in which the coded mask (32) has an anti-symmetric MURA type pattern and the portable device also comprises a rotation device (44) to reversibly rotate the coded mask from 0° to 90°.

5. Portable device according to any one of claims 1 to 4, in which the matrix detector (6, 20), sensitive to X or gamma rays, comprises a pixelated electronic detector or a radioluminescent screen with memory.

6. Method for using the portable device according to any one of claims 1 to 5, in which:

- the radiation source (4) and the detector (6) are placed on each side of the object (2) so that it can be examined by X or gamma radiography, or
- the radiation source (4) fitted with the shielding and collimation accessory (5), and the detector (6) fitted with the image formation accessory (10), are placed on the same side of the object (2) so that the latter can be examined by X or gamma backscattering imaging, or
- the detector (6), fitted with the image formation accessory (10), is placed facing the object (2) to examine the latter to determine whether or not it contains a radioactive source.

7. Method for using the portable device according to any one of claims 1 to 5, in which:

- the portable device comprises two detectors,
- the radiation source (4) fitted with the shielding and collimation accessory (5), and one (18) of the detectors, are placed on each side of the object (2) so that the latter can be examined by X or gamma radiography, and

- the other detector (6), fitted with the image formation accessory (10), and the source (4) are placed on the same side of the object (2) so that it can then be examined by X or gamma backscattering imaging.

8. Method for using the portable device according to any one of claims 1 to 5, in which:

- the portable device comprises two detectors (6, 20) fitted with their image formation accessories (10, 22),
- the radiation source (4), fitted with the shielding and collimation accessory (5), and the two detectors are placed on the same side of the object (2) to simultaneously examine the object by X or gamma backscattering along two different axes.

FIG. 1

FIG. 2

FIG. 3

FIG. 4

EP 2 581 733 B1

FIG. 5

16

FIG. 6

FIG. 7

FIG. 8A

FIG. 8B

FIG. 9

FIG. 10

FIG. 12

FIG. 11A

FIG. 11B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. ACCORSI ; R.C. LANZA.** Near Field artifact réduction in planar coded aperture imaging. *Applied Optics,* Septembre 2001, vol. 40 (26

- **S.R. GOTTESMAN ; E.E. FENIMORE.** *Applied Optics,* 1989, vol. 28, 4344